# EUROPEAN PATENT APPLICATION

(11) **EP 4 746 248 A1**
(43) Date of publication of application: **20.05.2026**
(21) Application number: 25801500.7
(22) Date of filing: 07.02.2025
(51) Int. Cl.: H02J 50/10, H01F 27/30

(54) **WIRELESS CHARGING MODULE**

(30) Priority: 13.09.2024 US 202418884825
(71) Applicant: Delta Electronics, Inc., Taoyuan City 33341 (TW)
(72) Inventor: YANG, Cheng-Lin, Taoyuan City 33341 (TW); LAI, Yu-Chun, Taoyuan City 33341 (TW); YEN, Chun-Ching, Taoyuan City 33341 (TW)
(74) Representative: 2K Patent Partnerschaft mbB
(86) International application number: PCT/CN2025/076136
(87) International publication number: WO 2026/056207

(57) **Abstract**

A wireless power-charging module is provided, including a magnetic core, a coil, and a magnetic tape. The coil and the magnetic tape are disposed on a surface of the magnetic core and surround a central axis of the magnetic core. A curved segment of the magnetic tape is located between two adjacent curved portions of the coil along a horizontal direction that is perpendicular to the central axis.

## Description

### TECHNICAL FIELD

The present invention relates to wireless power-charging module, and, in particular, to a wireless power-charging module that has magnetic glue.

### BACKGROUND

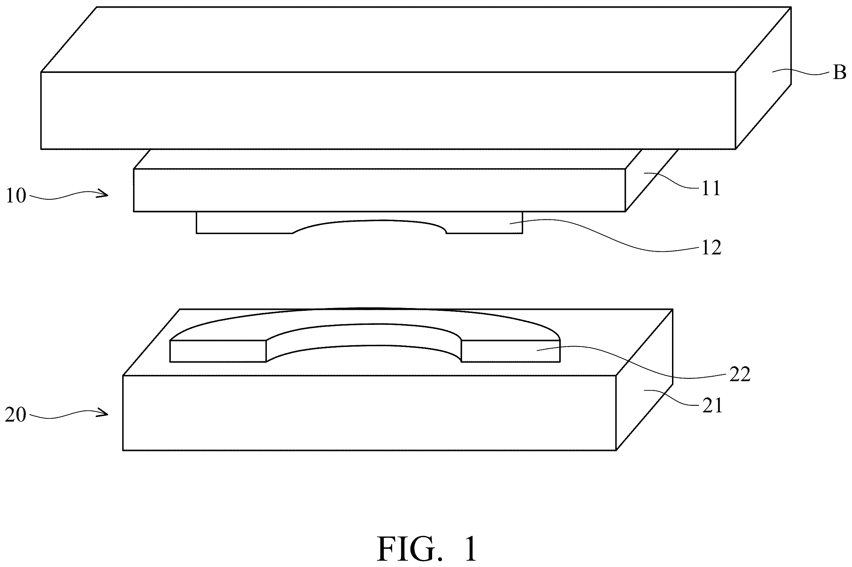

Referring to FIG. 1, FIG. 1 is a cross-sectional view of a conventional wireless power charging assembly.

As shown in FIG. 1, the conventional wireless power charging assembly includes a wireless power charging receiver 10 and a wireless power charging transmitter 20, wherein the wireless power charging receiver 10 has a magnetic core 11 and a coil 12 disposed on the magnetic core 11, and the coil 12 can be electrically connected to a battery B that is to be charged. Additionally, the wireless power charging transmitter 20 has a magnetic core 21 and a coil 22 disposed on the magnetic core 21. When a current signal is applied to the coil 22 by an external power source, the coil 12 of the wireless power charging receiver 10 can generate an induced voltage for charging the battery B.

However, with the limitation to the size and structure of the conventional wireless power charging assembly, it would be difficult to increase the magnetic coupling coefficient of the two coils 12 and 22 and the induced voltage in the coil 12. Moreover, as the magnetic cores 11 and 21 usually have considerable dimensions to meet the requirement of high-power output, miniaturization of the product would be difficult, and thus leading to inconvenience to the users.

Therefore, to design a wireless power-charging module with high power charging efficiency and compact size becomes a challenge.

### BRIEF SUMMARY OF THE INVENTION

To address the aforementioned problems, an embodiment of the present invention provides a wireless power-charging module that includes a magnetic core, a coil, and a magnetic tape. The coil is disposed on a surface of the magnetic core and surrounds a central axis of the magnetic core. The magnetic tape surrounds the central axis, wherein a curved segment of the magnetic tape is located between a plurality of curved portions of the coil along a horizontal direction that is perpendicular to the central axis.

In an embodiment, the curved segment of the magnetic tape is in contact between the curved portions of the coil.

In an embodiment, the magnetic tape is adhered to a side of the coil and wound around the central axis of the magnetic core.

In an embodiment, the magnetic tape is adhered to an outer side of the coil and surrounds the central axis of the magnetic core.

In an embodiment, the magnetic tape is adhered to an inner side of the coil and surrounds the central axis of the magnetic core.

In an embodiment, a plurality of curved segments of the magnetic tape and the curved portions of the coil are arranged in a staggered manner along the horizontal direction.

In an embodiment, the magnetic core has a protrusion, an annular wall, and an annular recess formed between the wall and the protrusion.

In an embodiment, the protrusion is formed at the center of the magnetic core.

In an embodiment, the surface is a bottom surface of the recess, and the coil and the magnetic tape are received in the recess.

In an embodiment, the magnetic tape comprises material with high magnetic permeability.

An embodiment of the present invention provides a wireless power-charging module that includes a magnetic core, a coil, and a magnetic element. The coil is disposed on a surface of the magnetic core and surrounds a central axis of the magnetic core. The magnetic element is disposed on the surface of the magnetic core and in contact with the coil, wherein a part of the magnetic element is located between a plurality of curved portions of the coil along a horizontal direction that is perpendicular to the central axis of the magnetic core.

In an embodiment, the magnetic element comprises a magnetic tape.

In an embodiment, the magnetic tape is adhered to a side of the coil and surrounds the central axis of the magnetic core.

In an embodiment, a plurality of curved segments of the magnetic tape and the curved portions of the coil are arranged in a staggered manner along the horizontal direction.

In an embodiment, the magnetic element comprises a magnetic glue used to fill in a gap between the magnetic core and the coil.

An embodiment of the present invention provides a wireless power-charging module that includes a magnetic core, a coil, and a magnetic glue. The coil is disposed on the magnetic core and electrically connect to a power source. At least a gap, formed between the magnetic core and the coil. The magnetic glue is used to fill in the gap and adhere the coil to the magnetic core.

In an embodiment, the wireless power-charging module further includes a magnetic tape disposed on the magnetic core and surrounding a central axis of the magnetic core. A curved segment of the magnetic tape is located between a plurality of curved portions of the coil along a horizontal direction that is perpendicular to the central axis.

### BRIEF DESCRIPTION OF THE DRAWINGS

FIG. 1 is a cross-sectional view of a conventional wireless power charging assembly.
FIG. 2 is a perspective diagram of a wireless power-charging module 30 in accordance with an embodiment of the invention.
FIG. 3 is an exploded diagram of the wireless power-charging module 30 in FIG. 2.
FIG. 4 is a cross-sectional view of the wireless power-charging module 30 taken along line A1-A2 in FIG. 2.
FIG. 5 is another cross-sectional view of the wireless power-charging module 30 taken along line A1-A2 in FIG. 2.
FIG. 6 is a partial cross-sectional view of the magnetic glue G dispensed on the surface of the recess 312 of the magnetic core 31.
FIG. 7 is a partial cross-sectional view of the magnetic glue G that is spread over the entire bottom surface 3121 and the entire lateral surface 3122 of the recess 312, in accordance with another embodiment of the invention.
FIG. 8 is a perspective diagram of a wireless power-charging module 40 in accordance with another embodiment of the invention.
FIG. 9 is an exploded diagram of the wireless power-charging module 40 in FIG. 8.
FIG. 10 is a cross-sectional view of the wireless power-charging module 40 taken along line A3-A4 in FIG. 8.
FIG. 11 is another cross-sectional view of the wireless power-charging module 40 taken along line A3-A4 in FIG. 8.
FIG. 12 is a perspective diagram of a wireless power-charging module 50 in accordance with another embodiment of the invention.
FIG. 13 is an exploded diagram of the wireless power-charging module 50 in FIG. 12.
FIG. 14 is a cross-sectional view of the wireless power-charging module 50 taken along line A5-A6 in FIG. 12.
FIG. 15 is another cross-sectional view of the wireless power-charging module 50 taken along line A5-A6 in FIG. 12.
FIG. 16 is a schematic diagram showing the magnetic glue G applied to the surface S of the magnetic core 51 to firmly connect the magnetic core 51 with the coil 52.
FIG. 17 is a cross-sectional view of a wireless power-charging module 60 in accordance with another embodiment of the invention.
FIG. 18 is a partial perspective diagram showing the magnetic tape T adhered to the outer side of the coil 62 in FIG. 17 before assembly.
FIG. 19 is a partial enlarged cross-sectional view showing the curved segments T1 of the magnetic tape T and the curved portions 621 of the coil 62 arranged in a staggered manner along the X axis.
FIG. 20 is a partial enlarged cross-sectional view showing the magnetic glue G applied to the surface S of the magnetic core 61 to firmly connect the magnetic core 61 with the coil 62 and the magnetic tape T.
FIG. 21 is a cross-sectional view of a wireless power-charging module 70 in accordance with another embodiment of the invention.
FIG. 22 is a partial perspective diagram showing the magnetic tape T adhered to the inner side of the coil 72 in FIG. 21 before assembly.
FIG. 23 is a partial enlarged cross-sectional view showing the segments T1 of the magnetic tape T and the curved portions 721 of the coil 72 arranged in a staggered manner along the X axis.
FIG. 24 is a partial enlarged cross-sectional view showing the magnetic glue G applied to the bottom surface of the annular recess 712 to firmly connect the magnetic core 71 with the coil 72 and the magnetic tape T.

Description for the numerals:
10: wireless power charging receiver
11: magnetic core
12: coil
20: wireless power charging transmitter
21: magnetic core
22: coil
30: wireless power-charging module
31: magnetic core
311: wall
312: recess
3121: bottom surface
3122: lateral surface
313: opening
314: protrusion
32: coil
40: wireless power-charging module
41: magnetic core
411: wall
412: recess
4121: bottom surface
4122: lateral surface
413: opening
414: protrusion
415: through hole
42: coil
50: wireless power-charging module
51: magnetic core
515: through hole
52: coil
60: wireless power-charging module
61: magnetic core
614: protrusion
62: coil
621: curved portion
70: wireless power-charging module
71: magnetic core
711: wall
712: recess
714: protrusion
72: coil
721: curved portion
B: battery
G: magnetic glue
S: surface
T: magnetic tape
T' : magnetic member
T1: curved segment
Z6: central axis
Z7: central axis

### DETAILED DESCRIPTION OF THE INVENTION

The making and using of the embodiments of the wireless power-charging module are discussed in detail below. It should be appreciated, however, that the embodiments provide many applicable inventive concepts that can be embodied in a wide variety of specific contexts. The specific embodiments discussed are merely illustrative of specific ways to make and use the embodiments, and do not limit the scope of the disclosure.

Unless defined otherwise, all technical and scientific terms used herein have the same meaning as commonly understood by one of ordinary skill in the art to which this invention belongs. It should be appreciated that each term, which is defined in a commonly used dictionary, should be interpreted as having a meaning conforming to the relative skills and the background or the context of the present disclosure, and should not be interpreted in an idealized or overly formal manner unless defined otherwise.

In the following detailed description of the preferred embodiments, reference is made to the accompanying drawings, and in which specific embodiments of which the invention may be practiced are shown by way of illustration. In this regard, directional terminology, such as top, bottom, left, right, front, back, etc., is used with reference to the orientation of the figures being described. The components of the present invention can be positioned in a number of different orientations. As such, the directional terminology is used for the purposes of illustration and is in no way limiting.

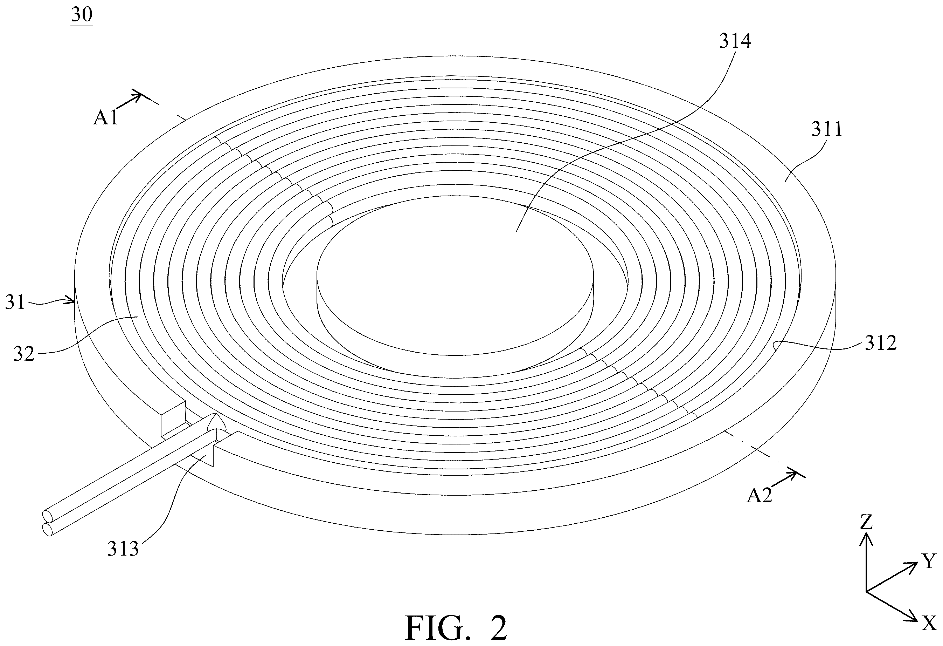

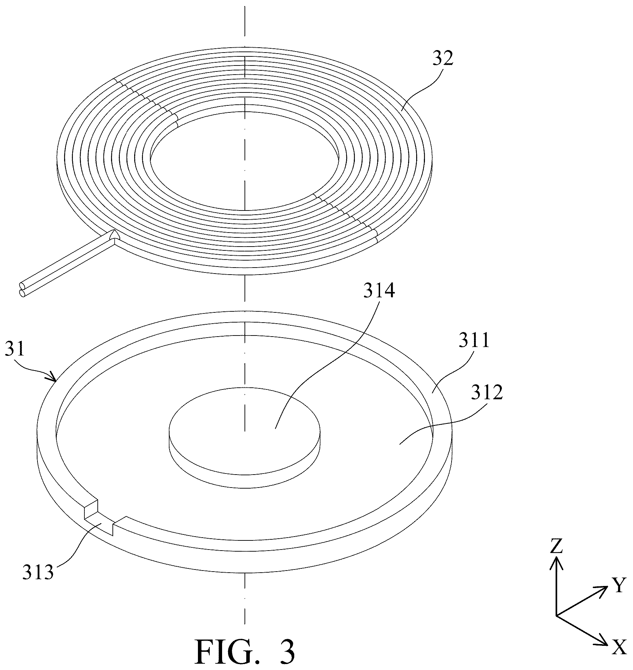

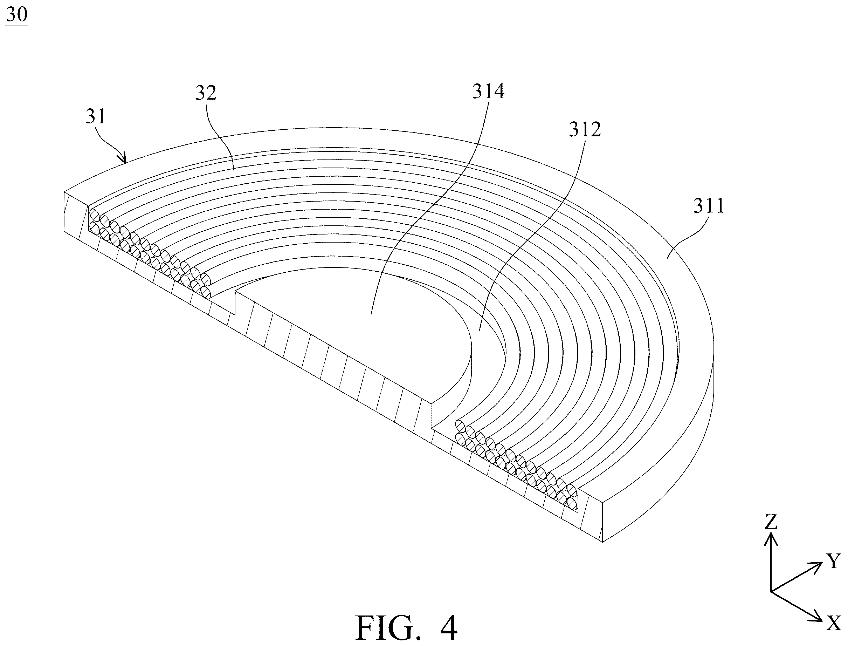

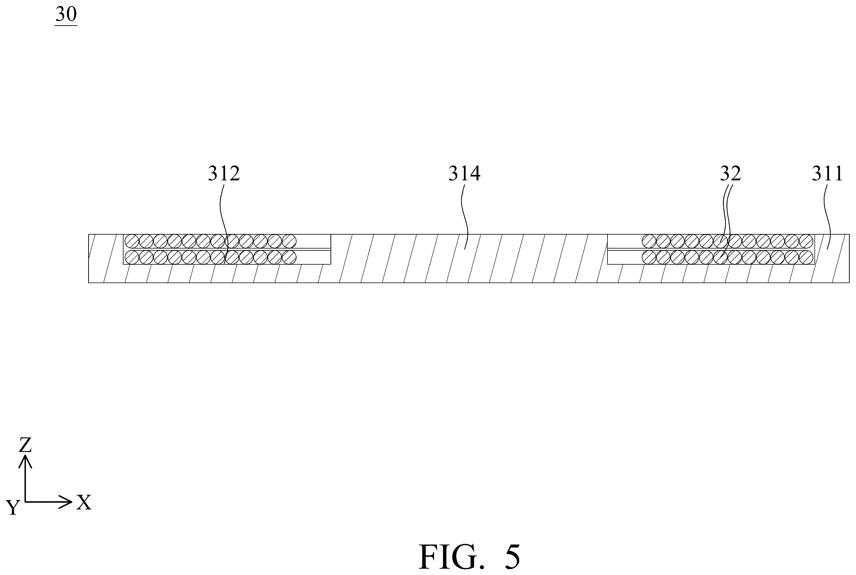

Referring to FIGs. 2, 3, 4 and 5, FIG. 2 is a perspective diagram of a wireless power-charging module 30 in accordance with an embodiment of the invention. FIG. 3 is an exploded diagram of the wireless power-charging module 30 in FIG. 2. FIG. 4 is a cross-sectional view of the wireless power-charging module 30 taken along line A1-A2 in FIG. 2. FIG. 5 is another cross-sectional view of the wireless power-charging module 30 taken along line A1-A2 in FIG. 2.

As shown in FIGs. 2-5, the wireless power-charging module 30 is a wireless power charging transmitter that can be coupled to a wireless power charging receiver for charging a battery (Wireless Power Charging).

Specifically, the wireless power-charging module 30 comprises a magnetic core 31 and a coil 32. The magnetic core 31 has an annular wall 311, an annular recess 312, an opening 313, and a protrusion 314 at the center of the magnetic core 31. The opening 313 is formed on the wall 311, and the recess 312 is formed between the wall 311 and the protrusion 314.

During assembly, the coil 32 is disposed in the recess 312 and surrounds the protrusion 314. Two ends of the coil 32 pass through the opening 313 to connect to an external power source (not shown). When the coil 32 is energized by a current signal from the external power source, the wireless power-charging module 30 can generate a charging magnetic field. It should be noted that the coil 32 may have a single-layer or multi-layer structure, but the invention is not limited to the embodiments described above.

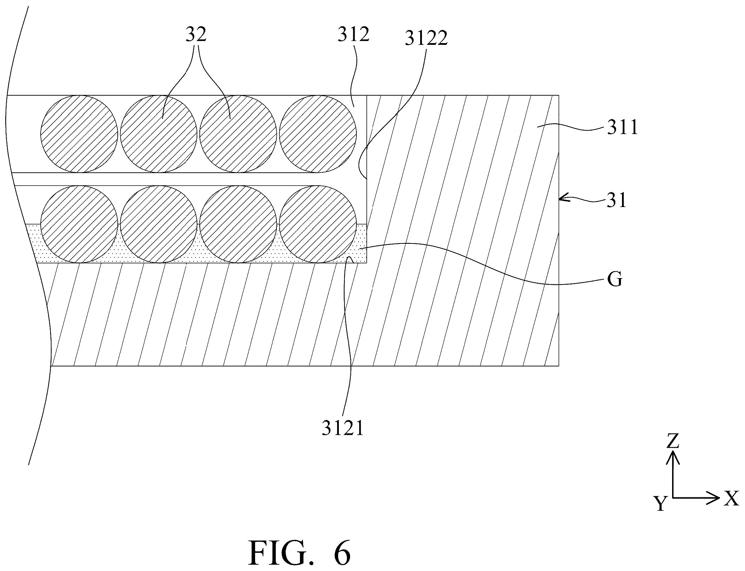

Referring to FIG. 6, FIG. 6 is a partial cross-sectional view of the magnetic glue G dispensed on the surface of the recess 312 of the magnetic core 31.

As shown in FIG. 6, to produce high induced voltage in the coil of the wireless power charging receiver, the magnetic glue G in this embodiment is applied to the surface of the recess 312, wherein the magnetic glue G comprises magnetic permeable material.

It should be noted that the magnetic glue G not only adheres the coil 32 to the magnetic core 31, but also enhances the magnetic field strength of the wireless power-charging module 30 in the Z direction (vertical direction). Thus, charging efficiency and miniaturization of the magnetic core 31 and the wireless power-charging module 30 can be greatly improved.

In some embodiments, the coil 32 may comprise planar coil. The magnetic glue G may comprise ferrite, ferrite alloy, amorphous alloy, nanocrystalline alloy, or another glue or powder with high magnetic permeability, but the invention is not limited to the embodiments described above.

It can be seen in FIG. 6 that the coil 32 is disposed on the bottom surface 3121 of the recess 312 of the magnetic core 31, and the magnetic glue G is dispensed on and covers the bottom surface 3121. Furthermore, the magnetic glue G extends from the bottom surface 3121 to the lateral surface 3122 of the recess 312, wherein the lateral surface 3122 is adjacent to the bottom surface 3121.

It should be noted that though the bottom surface 3121 of the recess 312 may be entirely covered by the magnetic glue G, the lateral surface 3122 of the recess 312 is not entirely covered by the magnetic glue G, and the magnetic glue G does not cover the top surface of the coil 32, thus achieving high magnetic field strength of the wireless power-charging module 30 in the Z direction (vertical direction).

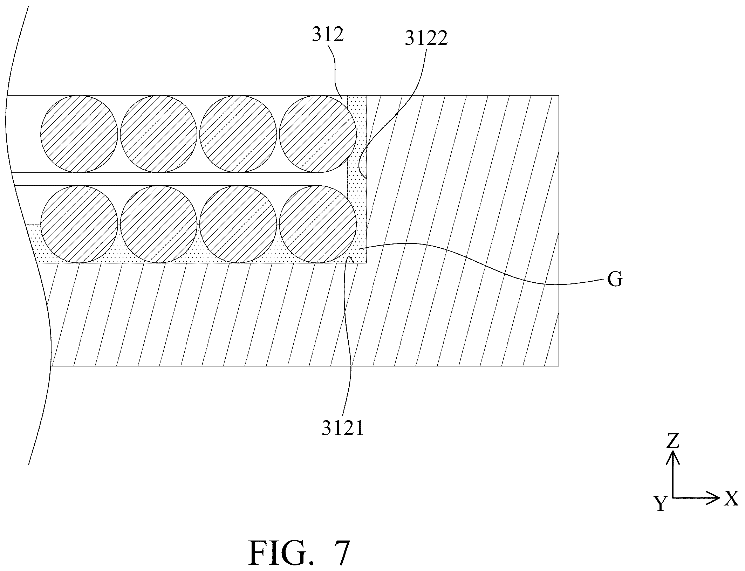

Referring to FIG. 7, FIG. 7 is a partial cross-sectional view of the magnetic glue G that is spread over the entire bottom surface 3121 and the entire lateral surface 3122 of the recess 312.

As shown in FIG. 7, the magnetic glue G in accordance with another embodiment of the invention may be spread over the entire bottom surface 3121 and the entire lateral surface 3122 of the recess 312, whereby the multilayer coil 32 can be firmly affixed in the recess 312. It should be noted that the magnetic glue G and the coil 32 have substantially the same height, and the magnetic glue G does not block the top side of the coil 32, thereby ensuring high magnetic field strength in the Z direction (vertical direction), high induced voltage in the coil of the wireless power charging receiver, and high power charging efficiency of the wireless power-charging module 30.

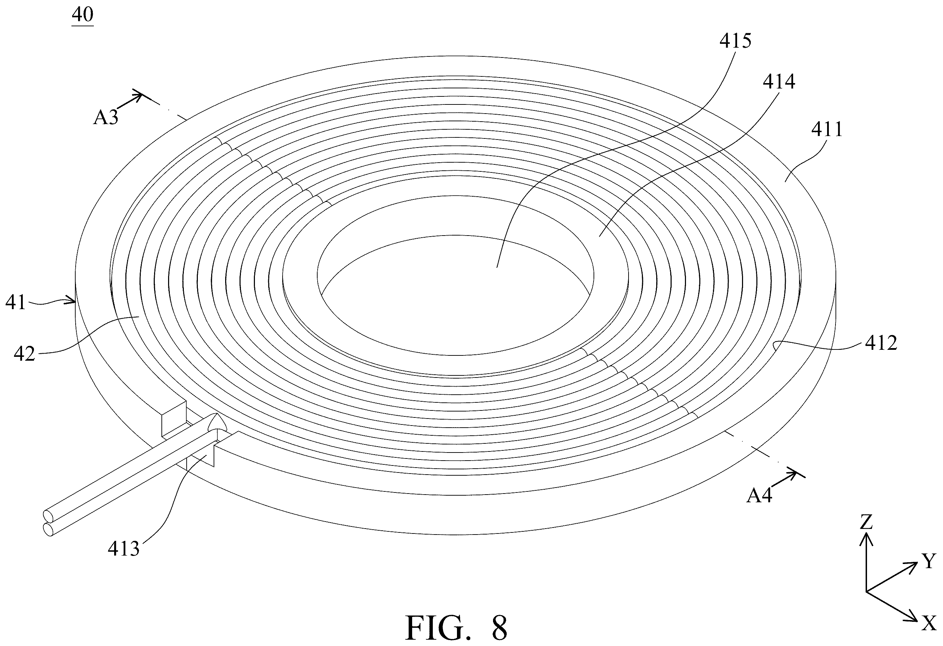

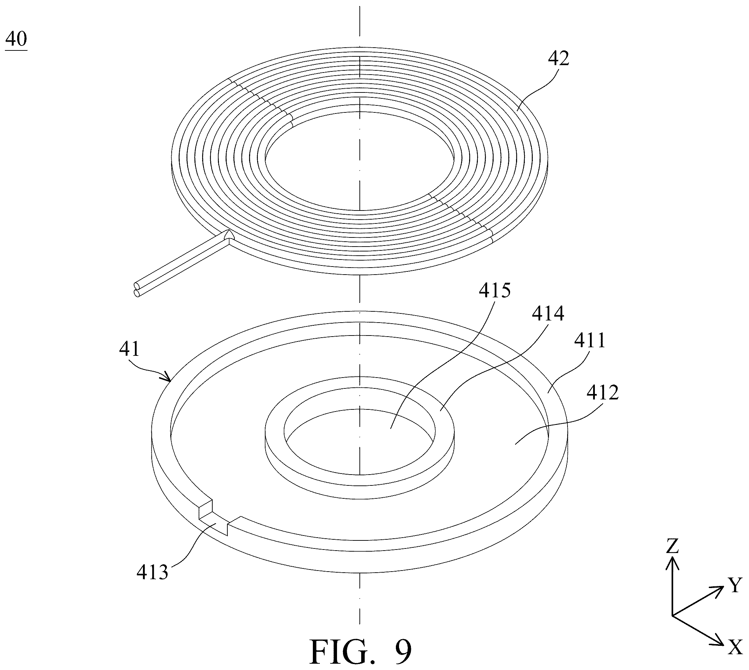

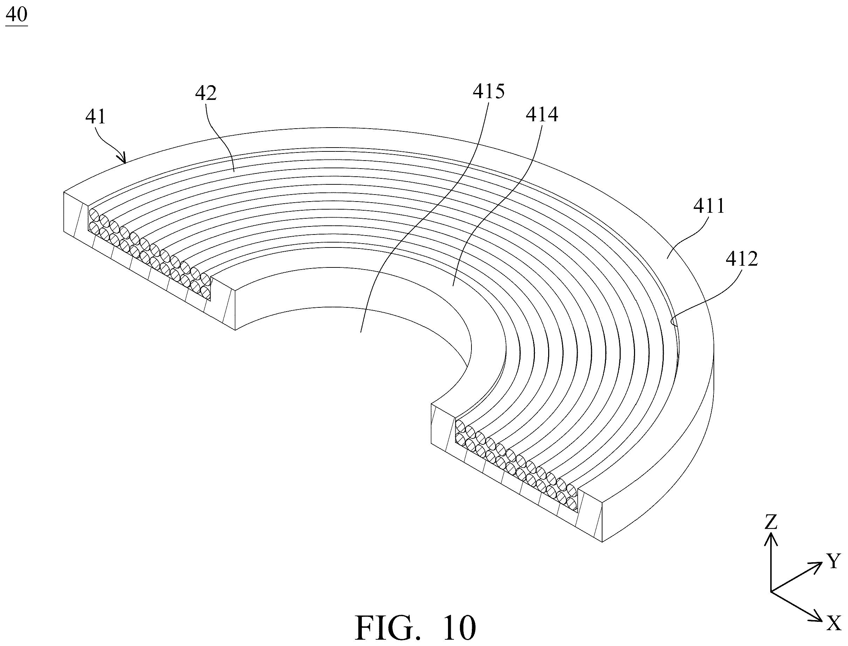

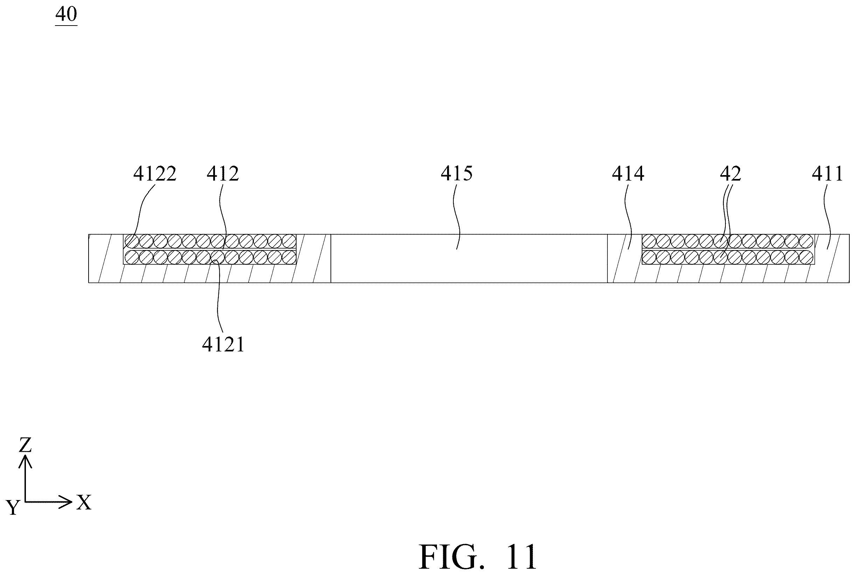

Referring to FIGs. 8, 9, 10 and 11, FIG. 8 is a perspective diagram of a wireless power-charging module 40 in accordance with another embodiment of the invention. FIG. 9 is an exploded diagram of the wireless power-charging module 40 in FIG. 8. FIG. 10 is a cross-sectional view of the wireless power-charging module 40 taken along line A3-A4 in FIG. 8. FIG. 11 is another cross-sectional view of the wireless power-charging module 40 taken along line A3-A4 in FIG. 8.

As shown in FIGs. 8-11, the wireless power-charging module 40 in another embodiment of the invention comprises a magnetic core 41 and a coil 42. The magnetic core 41 has an annular wall 411, an annular recess 412, an opening 413, a protrusion 414, and a through hole 415. The protrusion 414 has an annular structure surrounding the through hole 415 at the center of the magnetic core 41. The opening 313 is formed on the wall 411, and the recess 412 is formed between the wall 411 and the protrusion 414.

During assembly, the coil 42 is disposed in the recess 412, and the magnetic glue G is applied to the bottom surface 4121 of the recess 412 (FIG. 11). The magnetic glue G may extend from the bottom surface 4121 to the lateral surface 4122 of the recess 412 (FIG. 11). The magnetic glue G does not block the top surface of the coil 42, thereby ensuring high magnetic field strength in the Z direction (vertical direction), high induced voltage in the coil of the wireless power charging receiver, and high power charging efficiency of the wireless power-charging module 40.

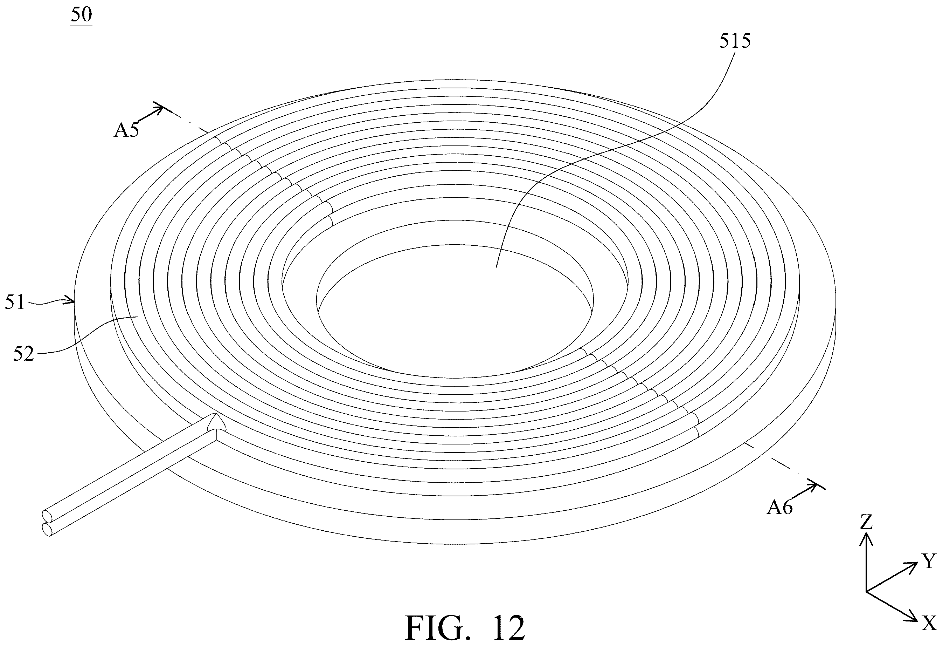

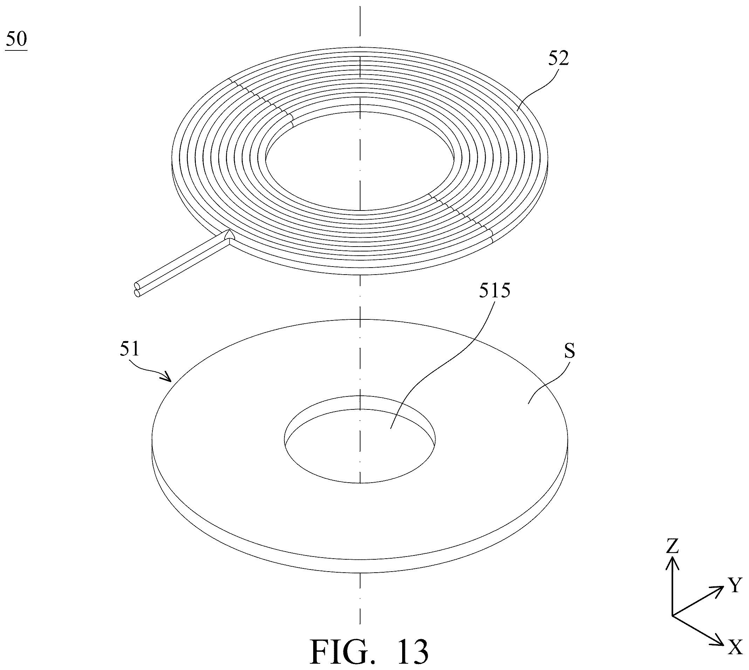

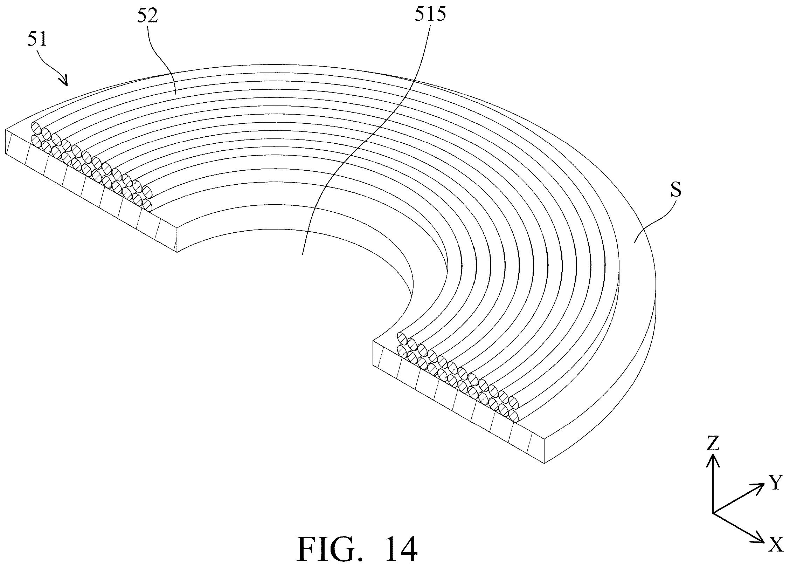

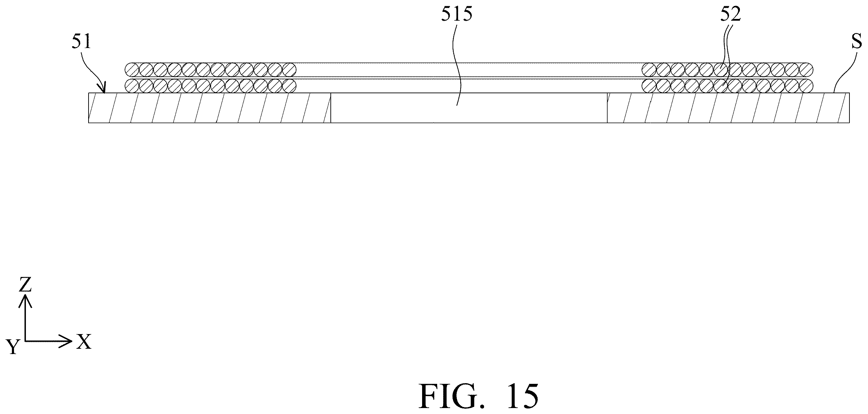

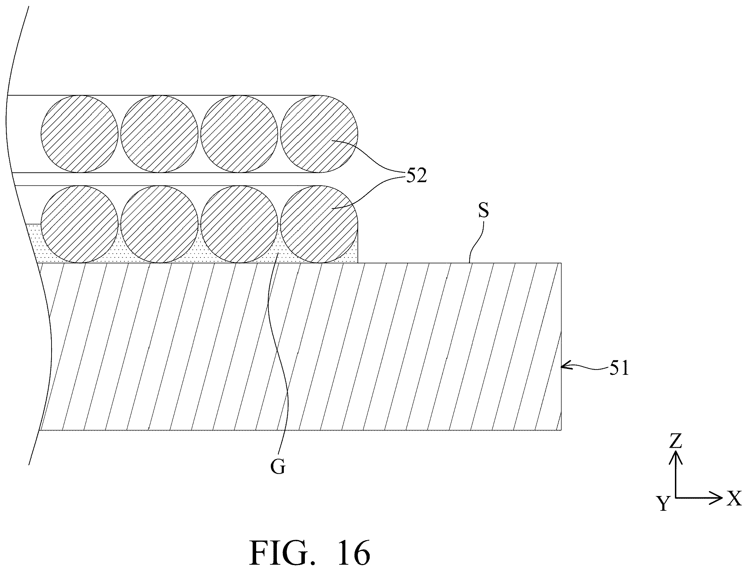

Referring to FIGs. 12, 13, 14, 15 and 16, FIG. 12 is a perspective diagram of a wireless power-charging module 50 in accordance with another embodiment of the invention. FIG. 13 is an exploded diagram of the wireless power-charging module 50 in FIG. 12. FIG. 14 is a cross-sectional view of the wireless power-charging module 50 taken along line A5-A6 in FIG. 12. FIG. 15 is another cross-sectional view of the wireless power-charging module 50 taken along line A5-A6 in FIG. 12. FIG. 16 is a schematic diagram showing the magnetic glue G applied to the surface S of the magnetic core 51 to firmly connect the magnetic core 51 with the coil 52.

As shown in FIGs. 12-16, the wireless power-charging module 50 in another embodiment of the invention comprises a flat magnetic core 51 and a coil 52, wherein the magnetic core 51 forms a through hole 515. During assembly, the coil 52 is disposed on the surface S of the magnetic core 51 and surrounds the through hole 515. The magnetic glue G is dispensed on the surface S of the magnetic core 51, whereby the magnetic core 51 and the coil 52 are adhered to each other.

It should be noted that the magnetic glue G does not block the top surface of the coil 32, thereby ensuring high magnetic field strength in the Z direction (vertical direction), high induced voltage in the coil of the wireless power charging receiver, and high power charging efficiency of the wireless power-charging module 50.

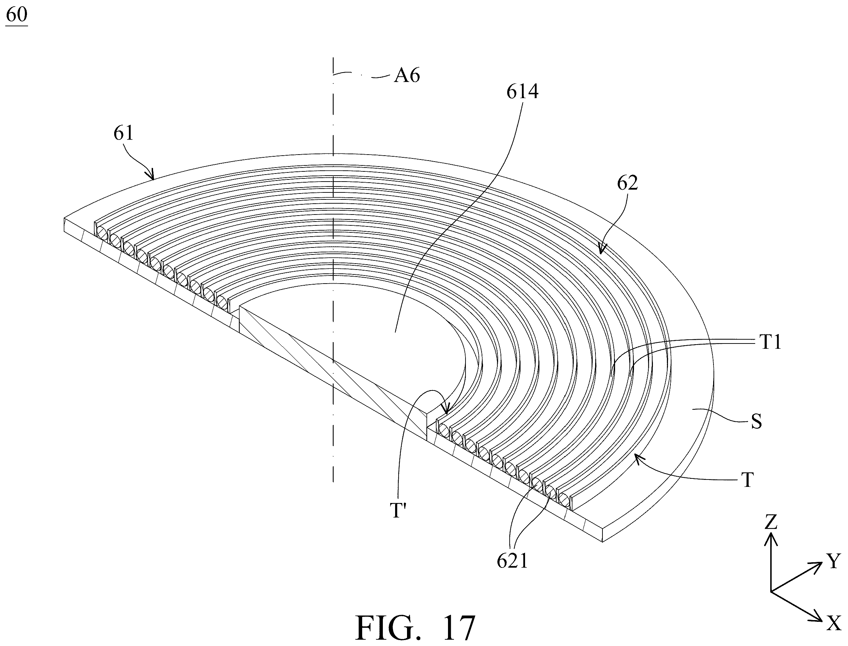

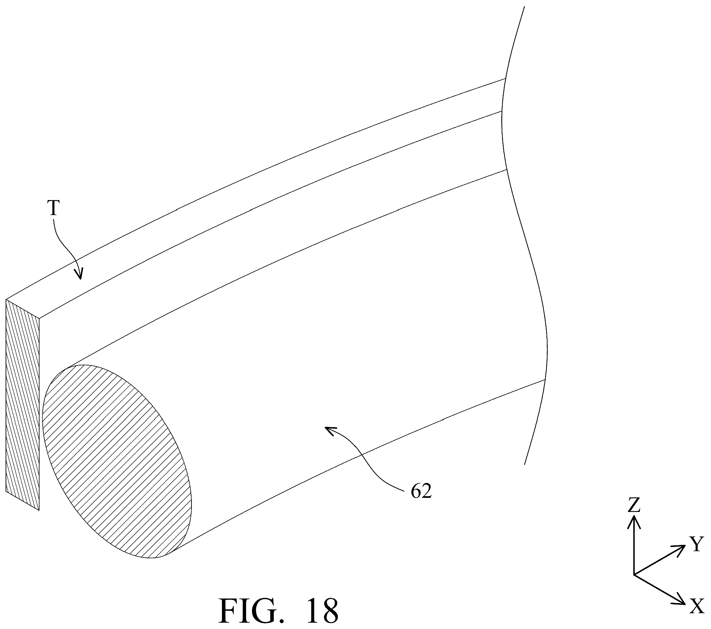

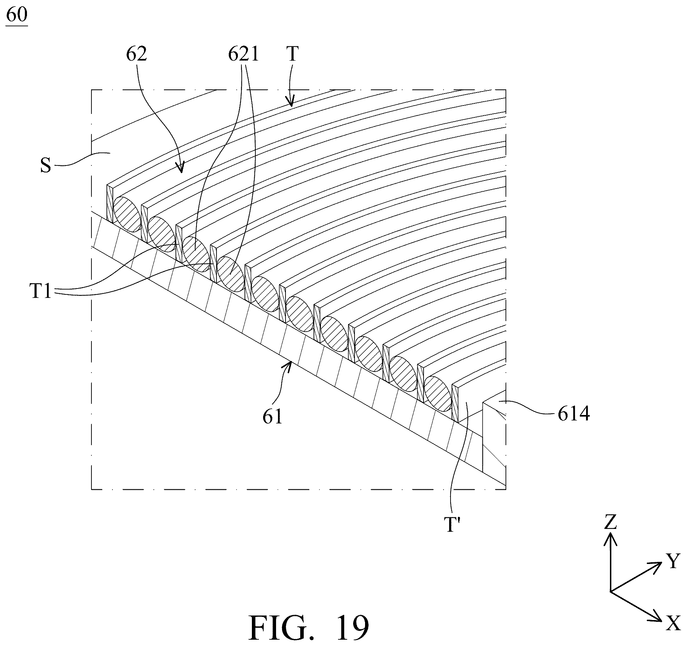

FIG. 17 is a cross-sectional view of a wireless power-charging module 60 in accordance with another embodiment of the invention. FIG. 18 is a partial perspective diagram showing the magnetic tape T adhered to the outer side of the coil 62 in FIG. 17. FIG. 19 is a partial enlarged cross-sectional view showing the curved segments T1 of the magnetic tape T and the curved portions 621 of the coil 62 arranged in a staggered manner along the X axis.

Referring to FIG. 17, the wireless power-charging module 60 in this embodiment comprises a flat magnetic core 61, a coil 62 and a magnetic tape T, wherein the coil 62 is electrically connected to a power source (not shown), and a protrusion 614 is formed at the center of the magnetic core 61. During assembly, the coil 62 and the magnetic tape T are disposed on the surface S of the magnetic core 61 and surround the central axis A6 of the magnetic core 61 that is parallel to the Z axis.

It can be seen in FIG. 18 that the magnetic tape T is adhered to the outer side of the coil 62 during assembly of the wireless power-charging module 60. After that, they can be wound around the central axis Z6 and the protrusion 614 of the magnetic core 61, as shown in FIGs. 17 and 19. For example, the magnetic tape T may be a single-sided or double-sided tape that comprise materials with high magnetic permeability.

In the configuration as shown in FIGs. 17 and 19, a plurality of curved segments T1 of the magnetic tape T and a plurality of curved portions 621 of the coil 62 are arranged in a staggered manner along the horizontal direction (X direction). With the curved segments T1 of the magnetic tape T in contact between adjacent curved portions 621 of the coil 62, the magnetic field intensity of the wireless power-charging module 60 can be enhanced, thereby helping the wireless power-charging module 60 to achieve high power charging efficiency.

Additionally, an annular magnetic member T' (e.g. another magnetic tape) is further provided on the surface S of the magnetic core 61 and located on the inner side of the coil 62, thus enhancing the magnetic flux density near the center of the wireless power-charging module 60. It should be noted that coil 62 is situated between the annular magnetic member T' and the magnetic tape T along the horizontal direction (X direction), whereby magnetic field uniformity and power charging efficiency of the wireless power-charging module 60 can be efficiently increased.

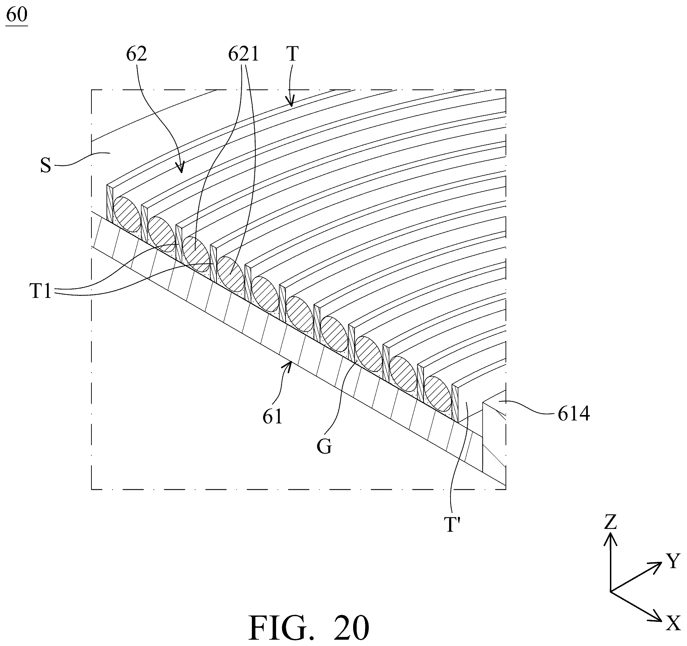

FIG. 20 is a partial enlarged cross-sectional view showing the magnetic glue G applied to the surface S of the magnetic core 61 to firmly adhere the magnetic core 61 to the coil 62 and the magnetic tape T.

As shown in FIG. 20, in another embodiment, the magnetic glue G may be dispensed on the surface S of the magnetic core 61, whereby the magnetic field intensity of the wireless power-charging module 60 can be further enhanced.

It should be noted that at least a part of the magnetic glue G is disposed in the space between the adjacent curved portions 621 of the coil 62, whereby the magnetic core 61, the coil 62, and the magnetic tape T are firmly adhered to each other to prevent the coil 62 and the magnetic tape T from falling off the magnetic core 61.

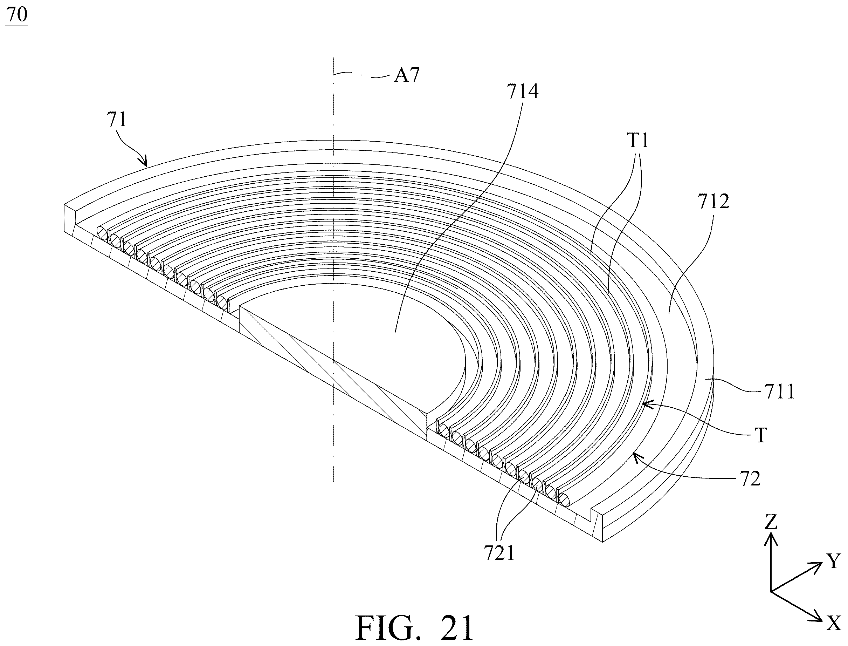

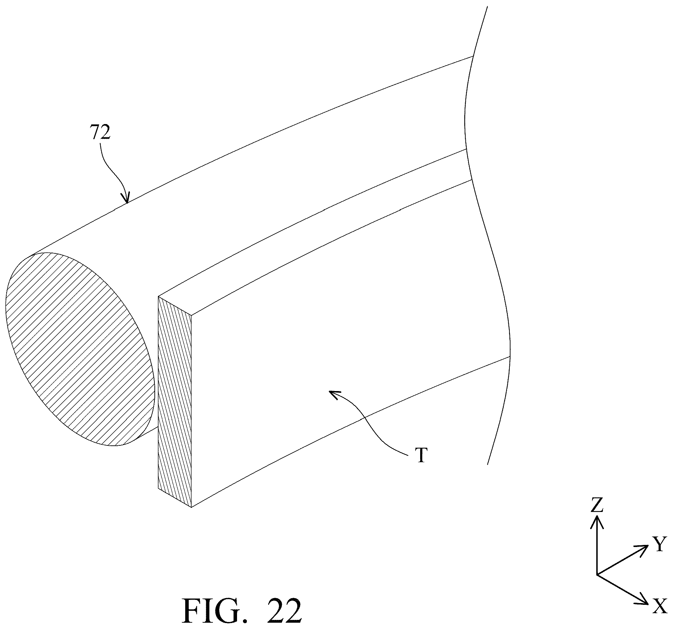

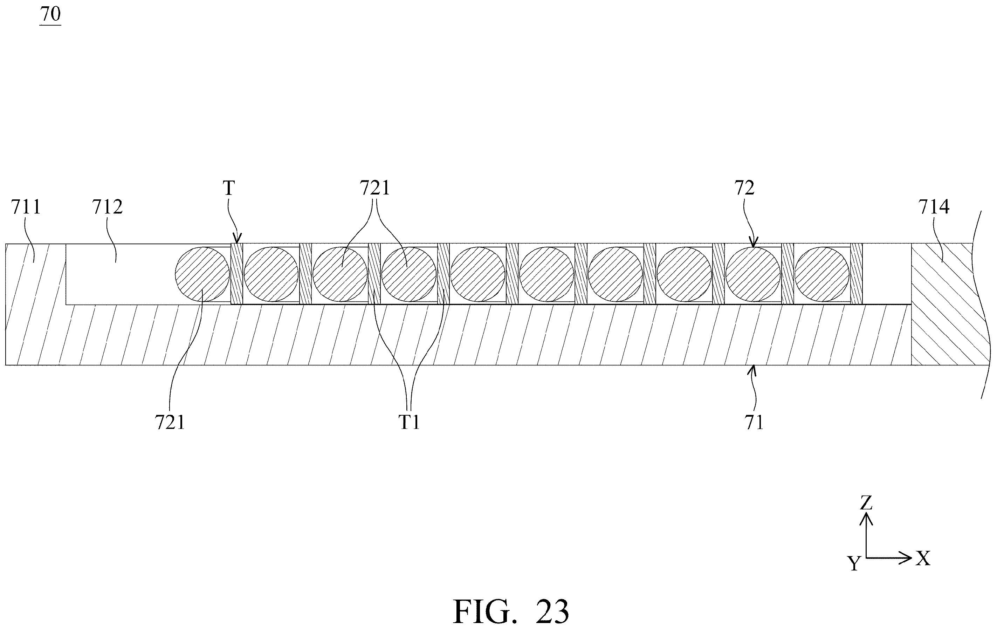

FIG. 21 is a cross-sectional view of a wireless power-charging module 70 in accordance with another embodiment of the invention. FIG. 22 is a partial perspective diagram showing the magnetic tape T adhered to the inner side of the coil 72 in FIG. 21 before assembly. FIG. 23 is a partial enlarged cross-sectional view showing the segments T1 of the magnetic tape T and the curved portions 721 of the coil 72 arranged in a staggered manner along the X axis.

As shown in FIG. 21, the wireless power-charging module 70 in this embodiment comprises a magnetic core 71, a coil 72 and a magnetic tape T. The coil 72 is electrically connected to a power source (not shown), and the magnetic core 71 has an annular wall 711, an annular recess 712, and a protrusion 714 at the center of the magnetic core 71, wherein the recess 712 is formed between the wall 711 and the protrusion 714. During assembly, the coil 72 and the magnetic tape T are disposed on the bottom surface of the annular recess 712 and surround the central axis Z7 of the magnetic core 71 that is parallel to the Z axis.

It can be seen in FIG. 22 that the magnetic tape T is adhered to the inner side of the coil 72 during assembly of the wireless power-charging module 70. After that, they can be wound around the central axis Z7 and the protrusion 714 of the magnetic core 71, as shown in FIGs. 21 and 23. For example, the magnetic tape T may be a single-sided or double-sided tape that comprise materials with high magnetic permeability.

In the configuration as shown in FIGs. 21 and 23, a plurality of curved segments T1 of the magnetic tape T and a plurality of curved portions 721 of the coil 72 are arranged in a staggered manner along the horizontal direction (X direction). With the curved segments T1 of the magnetic tape T in contact between adjacent curved portions 721 of the coil 72, the magnetic field intensity of the wireless power-charging module 70 can be enhanced, thereby helping the wireless power-charging module 70 to achieve high power charging efficiency.

It should be noted that the most outer curved portion 721 of the coil 72 is located between the magnetic tape T and the annular wall 711 of the magnetic core 71, thus enhancing the magnetic flux density and increasing magnetic field uniformity and power charging efficiency of the wireless power-charging module 70.

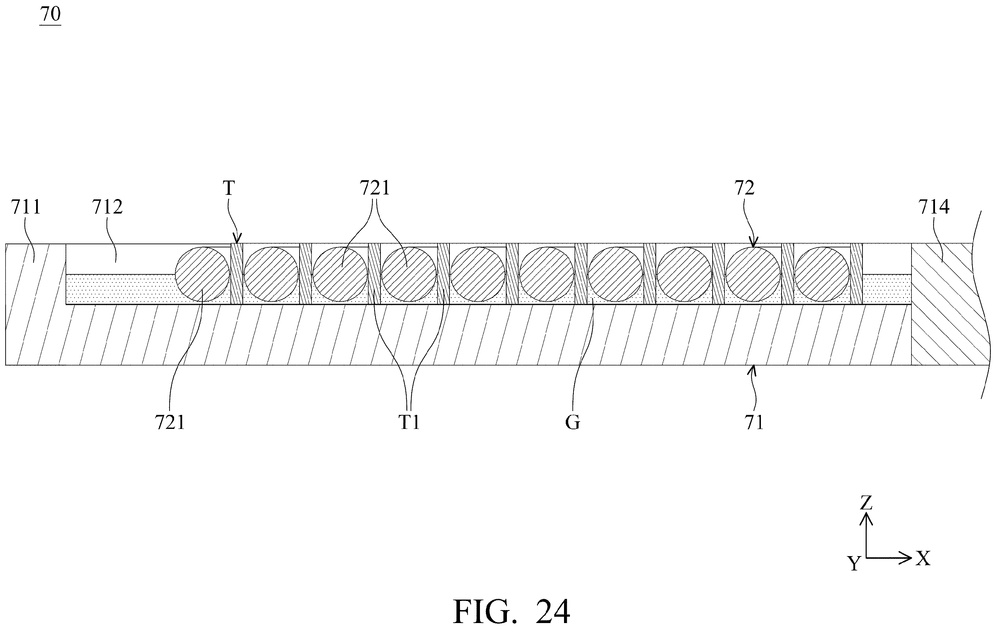

FIG. 24 is a partial enlarged cross-sectional view showing the magnetic glue G applied to the bottom surface of the annular recess 712 to firmly connect the magnetic core 71 with the coil 72 and the magnetic tape T.

As shown in FIG. 24, in another embodiment, the magnetic glue G may be dispensed on the bottom surface of the annular recess 712, whereby the magnetic field intensity of the wireless power-charging module 70 can be further enhanced.

It should be noted that at least a part of the magnetic glue G is disposed in the space between the adjacent curved portions 721 of the coil 72, whereby the magnetic core 71, the coil 72, and the magnetic tape T are firmly adhered to each other to prevent the coil 72 and the magnetic tape T from falling off the magnetic core 71.

In summary, the invention provides a wireless power-charging module having the magnetic element (e.g. magnetic glue or/and magnetic tape) disposed on the surface of the magnetic core. In an embodiment, the gap between the coil and the magnetic core may be filled with the magnetic glue. Additionally, the magnetic tape may be adhered to the inner or outer surface of the coil, and they can be wound around the central axis of the magnetic core during assembly to achieve high power charging efficiency of the wireless power-charging module.

In the present invention, the magnetic element (e.g. magnetic glue or/and magnetic tape) can be adhered to the coil thus enhancing the magnetic field strength of the wireless power-charging module. As a result, the induced voltage in the coil of the wireless power charging receiver can be increased, thereby helping the wireless power-charging module to achieve high power charging efficiency. For example, the magnetic glue may comprise ferrite, ferrite alloy, amorphous alloy, nanocrystalline alloy, or another glue or powder with high magnetic permeability. The magnetic tape may be a single-sided or double-sided tape that comprise materials with high magnetic permeability.

It should be noted that the wireless power-charging module may also be used as a wireless power charging receiver that can be electrically connected to a battery, and the magnetic glue and/or the magnetic tape may be adhered to the coil to facilitate high power charging efficiency, but the invention is not limited to the embodiments described above.

Although some embodiments of the present disclosure and their advantages have been described in detail, it should be understood that various changes, substitutions and alterations can be made herein without departing from the spirit and scope of the disclosure as defined by the appended claims. For example, it will be readily understood by those skilled in the art that many of the features, functions, processes, and materials described herein may be varied while remaining within the scope of the present disclosure. Moreover, the scope of the present application is not intended to be limited to the particular embodiments of the process, machine, manufacture, compositions of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps. Moreover, the scope of the appended claims should be accorded the broadest interpretation so as to encompass all such modifications and similar arrangements.

While the invention has been described by way of example and in terms of preferred embodiment, it should be understood that the invention is not limited thereto. On the contrary, it is intended to cover various modifications and similar arrangements as would be apparent to those skilled in the art. Therefore, the scope of protection of the present invention shall be determined by the scope of the appended claims.

## Claims

1. A wireless power-charging module, comprising:
a magnetic core;
a coil, disposed on a surface of the magnetic core and surrounding a central axis of the magnetic core; and
a magnetic tape, surrounding the central axis, wherein a curved segment of the magnetic tape is located between a plurality of curved portions of the coil along a horizontal direction that is perpendicular to the central axis.

2. The wireless power-charging module as claimed in claim 1, wherein the curved segment of the magnetic tape is in contact between the curved portions of the coil.

3. The wireless power-charging module as claimed in claim 1, wherein the magnetic tape is adhered to a side of the coil and wound around the central axis of the magnetic core.

4. The wireless power-charging module as claimed in claim 1, wherein the magnetic tape is adhered to an outer side of the coil and surrounds the central axis of the magnetic core.

5. The wireless power-charging module as claimed in claim 1, wherein the magnetic tape is adhered to an inner side of the coil and surrounds the central axis of the magnetic core.

6. The wireless power-charging module as claimed in claim 1, wherein a plurality of curved segments of the magnetic tape and the curved portions of the coil are arranged in a staggered manner along the horizontal direction.

7. The wireless power-charging module as claimed in claim 1, wherein the magnetic core has a protrusion, an annular wall, and an annular recess formed between the wall and the protrusion.

8. The wireless power-charging module as claimed in claim 7, wherein the protrusion is formed at the center of the magnetic core.

9. The wireless power-charging module as claimed in claim 7, wherein the surface is a bottom surface of the recess, and the coil and the magnetic tape are received in the recess.

10. The wireless power-charging module as claimed in claim 1, wherein the magnetic tape comprises material with high magnetic permeability.

11. A wireless power-charging module, comprising:
a magnetic core;
a coil, disposed on a surface of the magnetic core and surrounds a central axis of the magnetic core; and
a magnetic element, disposed on the surface of the magnetic core and in contact with the coil, wherein a part of the magnetic element is located between a plurality of curved portions of the coil along a horizontal direction that is perpendicular to the central axis of the magnetic core.

12. The wireless power-charging module as claimed in claim 11, wherein the magnetic element comprises a magnetic tape.

13. The wireless power-charging module as claimed in claim 12, wherein the magnetic tape is adhered to a side of the coil and surrounds the central axis of the magnetic core.

14. The wireless power-charging module as claimed in claim 12, wherein a plurality of curved segments of the magnetic tape and the curved portions of the coil are arranged in a staggered manner along the horizontal direction.

15. The wireless power-charging module as claimed in claim 11, wherein the magnetic element comprises a magnetic glue used to fill in a gap between the magnetic core and the coil.

16. A wireless power-charging module, comprising:
a magnetic core;
a coil, disposed on the magnetic core and electrically connect to a power source;
at least a gap, formed between the magnetic core and the coil; and
a magnetic glue, used to fill in the gap and adhere the coil to the magnetic core.

17. The wireless power-charging module as claimed in claim 16, wherein the wireless power-charging module further comprises a magnetic tape disposed on the magnetic core and surrounding a central axis of the magnetic core, a curved segment of the magnetic tape is located between a plurality of curved portions of the coil along a horizontal direction that is perpendicular to the central axis.
